(19) Europäisches Patentamt
European Patent Office
Office européen des brevets

(11) Veröffentlichungsnummer: **0 016 726**
**B1**

(12) # EUROPÄISCHE PATENTSCHRIFT

(45) Veröffentlichungstag der Patentschrift: **18.05.83**

(51) Int. Cl.³: **C 09 B 44/02,** C 09 B 29/32, D 06 P 1/41, D 21 H 3/70

(21) Anmeldenummer: **80810059.8**

(22) Anmeldetag: **18.02.80**

(54) **Basische bzw. quaternierte Azofarbstoffe der 2-(4'-Azophenyl)-benzthiazol-Reihe, Verfahren zu deren Herstellung sowie deren Verwendung zum Färben und Bedrucken von Textilmaterial, Papier und Leder.**

(30) Priorität: **23.02.79 CH 1843/79**

(43) Veröffentlichungstag der Anmeldung:
**01.10.80 Patentblatt 80/20**

(45) Bekanntmachung des Hinweises auf die Patenterteilung:
**18.05.83 Patentblatt 83/20**

(84) Benannte Vertragsstaaten:
**CH DE FR GB IT**

(56) Entgegenhaltungen:
**DE-A-1 903 058**
**DE-A-1 965 992**
**DE-B-1 015 163**
**FR-A-2 216 286**

(73) Patentinhaber: **CIBA-GEIGY AG, Patentabteilung Postfach, CH-4002 Basel (CH)**

(72) Erfinder: **Adam, Jean-Marie, Dr., 3, rue de Montreux, F-68300 Saint-Louis (FR)**
Erfinder: **Galafassi, Pierre, Dr., 12, rue des Sapins, F-68170 Rixheim (FR)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 016 726 B1

ACTORUM AG

# Basische bzw. quaternierte Azofarbstoffe der 2-(4′-Azophenyl)-benzthiazol-Reihe, Verfahren zu deren Herstellung sowie deren Verwendung zum Färben und Bedrucken von Textilmaterial, Papier und Leder

Die Erfindung betrifft neue Azoverbindungen, Verfahren zu deren Herstellung und die Verwendung dieser neuen Azoverbindungen als Farbstoffe zum Färben und Bedrucken von Textilmaterialien, Papier und Leder.

Die neuen Azoverbindungen entsprechen der Formel I

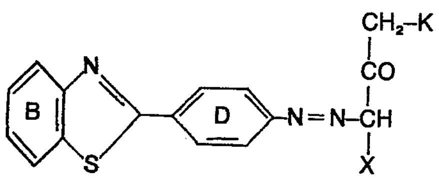

(I)

worin bedeuten:

K einen gegebenenfalls quaternisierten basischen Rest,

X den Rest COOR, worin R eine Alkylgruppe oder eine gegebenenfalls substituierte Phenylgruppe bedeutet, oder X stellt den Rest CONHR′ dar, worin R′ eine Alkylgruppe oder eine gegebenenfalls substituierte Phenylgruppe bedeutet und wobei die Benzoreste B und/oder D noch weiter substituiert sein können.

Bedeutet K eine basische Gruppe, so handelt es sich beispielsweise um die Gruppe

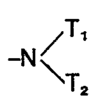

worin bedeuten:

$T_1$ Wasserstoff oder einen niedrigmolekularen, gegebenenfalls durch Hydroxyl substituierten Alkylrest ($C_1$–$C_4$) oder einen gegebenenfalls durch 1 bis 3 Methylreste substituierten Cyclohexylrest oder einen Phenylrest; und

$T_2$ einen niedrigmolekularen, gegebenenfalls durch Hydroxyl substituierten Alkylrest ($C_1$–$C_4$), wobei die Reste

$T_1$ und $T_2$ zusammen mit dem N-Atom auch einen heterocyclischen Ring bilden können, z.B. einen Pyrrolidin-, Morpholin- oder Piperazinring; beim basischen Rest K handelt es sich beispielsweise um folgende Reste:

$-N-(CH_3)_2$

$-N-(C_2H_5)_2$

$-NH-CH_3$

$-NH-C_3H_7$

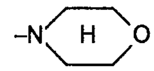

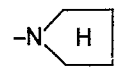

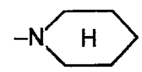

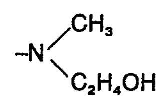

$-N-(C_2H_4OH)_2$

Bedeutet K eine quaternisierte, basische Gruppe, so handelt es sich beispielsweise um einen Rest der Formeln

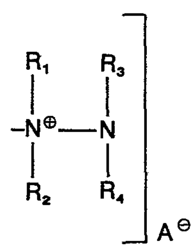

oder

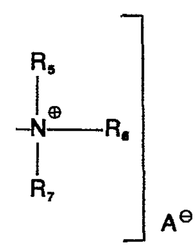

worin bedeuten:

$R_1$ und $R_2$ unabhängig voneinander eine gegebenenfalls substituierte Alkylgruppe ($C_1$–$C_4$) oder eine gegebenenfalls substituierte Cycloalkylgruppe, oder $R_1$ bildet mit $R_2$ unter Einschluss des N-Atoms einen heterocyclischen Ring;

$R_3$ und $R_4$ unabhängig voneinander Wasserstoff, gegebenenfalls substituiertes Alkyl($C_1$–$C_4$) oder eine gegebenenfalls substituierte Cycloalkyl- oder Arylgruppe;

$R_5$ Wasserstoff, gegebenenfalls substituiertes Alkyl ($C_1$–$C_4$) oder gegebenenfalls substituiertes Cycloalkyl oder Aryl;

$R_6$ Wasserstoff, gegebenenfalls substituiertes Alkyl ($C_1$–$C_4$), gegebenenfalls substituiertes Cycloalkyl, gegebenenfalls substituiertes Alkoxy oder gegebenenfalls substituiertes Aryl;

$R_7$ gegebenenfalls substituiertes Alkyl ($C_1$–$C_4$) oder gegebenenfalls substituiertes Cycloalkyl oder $R_1$ zusammen mit $R_3$ und/oder $R_2$ zusammen mit $R_4$ bilden mit den N-Atomen zusammen einen heterocyclischen Ring, oder $R_5$ und $R_6$ oder $R_5$, $R_6$ und $R_7$ bilden unter Einschluss des N-Atoms einen heterocyclischen Ring, und worin $A^\ominus$ ein Anion darstellt.

Beim quaternisierten Rest K handelt es sich beispielsweise um folgende Reste:

$-N^{\oplus}(CH_3)_3$

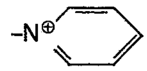

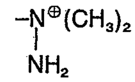

$-N^{\oplus}(C_2H_5)_3$

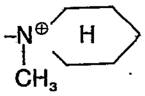

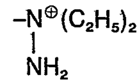

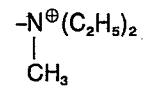

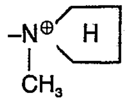

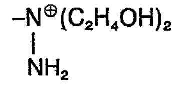

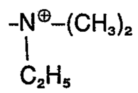

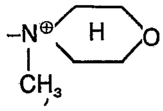

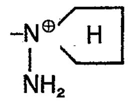

$-N^{\oplus}(C_2H_4OH)_3$

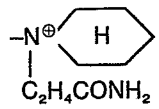

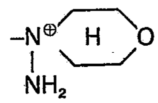

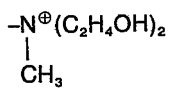

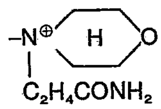

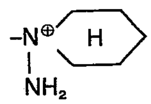

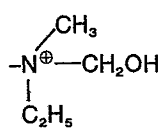

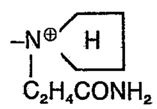

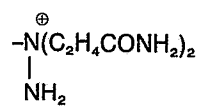

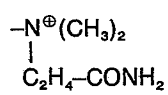

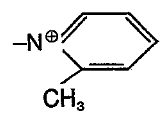

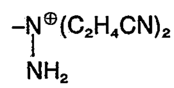

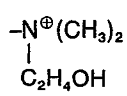

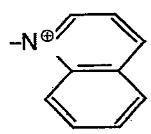

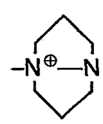

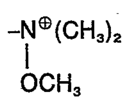

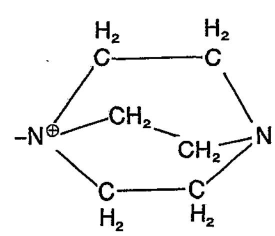

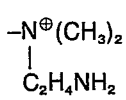

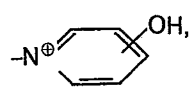 OH, $NH_2$, COOH, CN

In bevorzugten Azoverbindungen der Formel I bedeutet K einen quaternisierten basischen Rest und stellt insbesondere den Pyridiniumrest dar.

Hat X die Bedeutung einer COOR-Gruppe, so stellt R eine unverzweigte oder verzweigte Alkylgruppe mit 1 bis 4 Kohlenstoffatomen dar, wie die Methyl-, Äthyl-, n- und iso-Propyl oder n-, sec.- oder tert.-Butylgruppe, oder R bedeutet die unsubstituierte Phenylgruppe oder eine Phenylgruppe, welche substituiert ist durch beispielsweise: Alkyl ($C_1$–$C_4$, unverzweigt oder verzweigt), Alkoxy ($C_1$–$C_4$), Phenoxy oder Halogen wie Fluor, Chlor oder Brom.

Hat X die Bedeutung einer CONHR'-Gruppe, so stellt R' beispielsweise dar: eine Alkylgruppe ($C_1$–$C_4$, unverzweigt und verzweigt), eine unsubstituierte Phenylgruppe oder eine Phenylgruppe, welche ein- oder mehrmals substituiert ist, beispielsweise durch Alkyl ($C_1$–$C_4$, unverzweigt oder verzweigt), Alkoxy ($C_1$–$C_4$), Phenoxy, Halogen wie Fluor, Chlor oder Brom; $NO_2$, CN, $SO_2NH_2$ oder am N-Atom mono- oder dialkyliertes $SO_2NH_2$, $-N=N$-aryl, vor allem $-N=N-C_6H_5$, –NH-acyl, vor allem $-NHCOCH_3$ und Heteroreste, wie vor allem der Benzthiazolrest oder der Phenylrest R' kann substituiert sein durch die Gruppe:

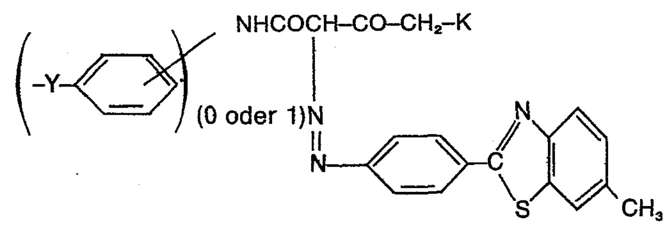

worin Y = O, S, NH, NHCO oder $NHCONH_2$ bedeutet und K die genannte Bedeutung besitzt.

In bevorzugten Azoverbindungen der Formel I bedeutet X den Rest CONHR′, worin R′ eine gegebenenfalls substituierte Phenylgruppe, insbesondere eine solche bedeutet, die durch Alkoxy substituiert ist.

Sind die Benzoreste B und/oder D weiter substituiert, so kommen als Substituenten vor allem in Frage: Alkyl ($C_1$–$C_4$) unverzweigt oder verzweigt, wie die Methyl-, Äthyl-, n- und iso-Propyl oder n- und iso-Butylgruppe; Halogen wie Fluor, Chlor oder Brom; Alkoxy ($C_1$–$C_4$) wie Methoxy, Äthoxy, Propoxy oder Butoxy; $SO_2NH_2$; $NO_2$; OH und Phenyl.

In bevorzugten Azoverbindungen ist der Benzoring B substituiert, vor allem durch Alkyl, insbesondere durch Methyl, und der Benzoring D ist nicht weiter substituiert.

Besonders interessante Azoverbindungen, infolge ihres guten Aufbaues entsprechen der Formel I, worin K einen quaternisierten basischen Rest, vor allem den Pyridiniumrest, darstellt, X den Rest CONHR′, worin R′ eine gegebenenfalls durch Alkoxy substituierte Phenylgruppe bedeutet und worin der Benzorest B durch eine Alkylgruppe substituiert ist und der Benzorest D nicht weiter substituiert ist.

Gegenüber chemisch nächstvergleichbaren Farbstoffen, z.B. solchen, bekannt aus der DE-C 1 903 058 und 1 965 992, weisen die erfindungsgemässen Farbstoffe einen besseren Farbstoffaufbau auf dem gefärbten Material auf.

Man erhält die neuen Azoverbindungen der Formel I, indem man beispielsweise

a) eine Verbindung der Formel II

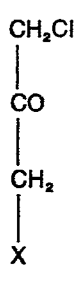

(II)

mit einem diazotierten Amin der Formel III

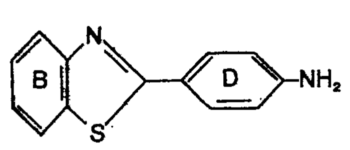

(III)

kuppelt und das Kupplungsprodukt anschliessend mit einem Amin zu einer basischen oder kationischen Verbindung umsetzt und die basische Gruppe gegebenenfalls quaternisiert, oder

b) eine Verbindung der Formel II

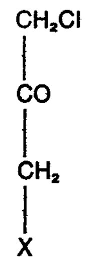

(II)

mit einem Amin zu einer basischen oder kationischen Verbindung umsetzt und anschliessend mit einem diazotierten Amin der Formel III kuppelt, wobei in allen Formeln die Symbole X, B und D die unter Formel I angegebene Bedeutung haben.

Die Verbindungen der Formel II sind bekannt, z.B. aus J.A.C.S. 62 (1940) p. 1147 und können nach bekannten Methoden hergestellt werden, z.B. durch Chlorieren von Diketen mit $Cl_2$ in einem chlorierten Lösungsmittel wie Tetrachlorkohlenstoff, wobei man zu Verbindungen der Formel $Cl–CH_2–CO–CH_2–COCl$ gelangt, welche man anschliessend mit einem Amin $NH_2R'$ bzw. einem Alkanol ROH umsetzt, worin die Symbole R und R′ die unter Formel I angegebene Bedeutung haben.

Als Verbindungen der Formel II sind beispielsweise genannt: 4-Chloracetessigsäure-(4′-methoxy)-benzamid,
4-Chloracetessigsäure-(2′-methoxy)-benzamid,
4-Chloracetessigsäure-(2′-nitro)-benzamid,
4-Chloracetessigsäure-(4′-nitro)-benzamid,
4-Chloracetessigsäure-(4′-acetylamino)-benzamid,
4-Chloracetessigsäure-(4′-chlor)-benzamid,
4-Chloracetessigsäure-(2′,4′-dichlor)-benzamid,
4-Chloracetessigsäure-(4′-dimethylaminosulfonyl)-benzamid,
4-Chloracetessigsäure-(4′-sulfamid)-benzamid,
4-Chloracetessigsäure-(4′-monoäthylaminosulfonyl)-benzamid,
4-Chloracetessigsäure-(2′-methyl)-benzamid,
4-Chloracetessigsäure-(4′-tert.-Butyl)-benzamid,
4-Chloracetessigsäure-(2′,4′-dimethyl)-benzamid,
4-Chloracetessigsäure-(2′,4′,6′-trimethyl)-benzamid,
4-Chloracetessigsäure-(2′-cyan)-benzamid,
4-Chloracetessigsäure-(4′-azobenzol)-benzamid und
4-Chloracetessigsäure-(4′-[6″-methyl]-benzthiazolyl)-benzamid.

Die Verfahrensvariante a) besteht darin, dass man die Verbindungen der Formel II mit einem auf

übliche Art und Weise diazotierten Amin der Formel III umsetzt und anschliessend das Halogen im Kupplungsprodukt durch einen Aminrest austauscht. Setzt man dabei das Kupplungsprodukt mit einem primären oder sekundären Amin beispielsweise Dimethylamin um, so gelangt man zu Verbindungen der Formel I, worin K einen basischen Rest darstellt, die anschliessend durch Quaternierung in kationische Verbindungen übergeführt werden können, oder man setzt das Kupplungsprodukt mit einem tertiären Amin wie Pyridin oder Trimethylamin um, wobei man zu Verbindungen der Formel I gelangt, worin K einen kationischen Rest darstellt.

Die Verfahrensvariante b) besteht darin, dass man die Verbindung der Formel II zuerst mit einem primären oder sekundären Amin, gegebenenfalls unter nachfolgender Quaternierung, umsetzt, oder mit einem tertiären Amin umsetzt unter anschliessender Kupplung auf ein diazotiertes Amin der Formel III.

Die Amine der Formel III sind ebenfalls bekannt und können nach bekannten Methoden hergestellt werden. Genannt ist z.B. das 2-(4'-Aminophenyl)-6-methylbenzthiazol.

Die Quaternisierungsreaktion und die Kupplungsreaktion werden ebenfalls nach bekannten Methoden durchgeführt.

Handelt es sich beim Symbol K um eine quaternisierte basische Gruppe, so kommen als Anionen in Frage: anorganische wie organische Anionen, beispielsweise Halogen, wie Chlorid-, Bromid- oder Sodid-, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Bevorzugte Anionen sind in Abhängigkeit von der Verwendungsart der Verbindungen: z.B. das Acetat- und Chlorid-ion (für Textil- und Papiermaterialien).

Die Quaternisierung erfolgt z.B. in einem inerten Lösungsmittel wie Chlorbenzol, oder gegebenenfalls in wässriger Suspension oder ohne Lösungsmittel in einem Überschuss des Quaternisierungsmittels bei einer Temperatur von ca. 20 bis 120 °C, mit Quaternisierungsmitteln.

Geeignete Quaternisierungsmittel sind z.B. Alkylhalogenide, wie Methyl- oder Äthylchlorid, Methyl-, Äthyl- oder Butylbromid oder Methyl- oder Äthyljodid, vor allem Alkylsulfate, wie Dimethyl-, Diäthyl- und Dibutylsulfat, oder Benzylchlorid, Chloressigsäureamid, Acrylsäureester, Epoxide, wie Äthylenoxyd, Epichlorhydrin, Alkylester von aromatischen Sulfonsäuren, wie Methyl-p-toluolsulfonat, Methylbenzolsulfonat, sowie die Propyl- und Butylester von Benzolsulfonsäure.

Verwendung finden die neuen basischen, gegebenenfalls quaternierten Verbindungen der Formel I als Farbstoffe zum Färben und/oder Bedrukken von Textilmaterialien, Papier und Leder.

Dienen die neuen Farbstoffe zum Färben und/oder Bedrucken von Textilmaterialien, so kommen als solche Wolle, Seide und sauer modifizierte Polyamidmaterialien sowie Polyacrylnitrilmaterialien (z.B. Nasskabel) und basisch färbbares, modifiziertes Polyestermaterial in Frage, weiterhin natürliche und regenerierte Cellulosematerialien wie Baumwolle und Viscose, wobei man Ausfärbungen erhält, die durch einen guten Aufbau des Farbstoffes gekennzeichnet sind. Die erhaltenen Färbungen weisen gute Echtheiten, vor allem Nassechtheiten wie Waschechtheiten und Lichtechtheiten, auf. Darüber hinaus ist es von Vorteil, dass die erfindungsgemässen Azoverbindungen der Formel I ohne Vorbehandlung der Cellulosematerialien und ohne zusätzliche Salzzugabe in die Färbeflotte auf diese Materialien aufziehen.

Eine bevorzugte Verwendung der erfindungsgemässen Azoverbindungen der Formel I liegt in der Anwendung zum Färben von Papier aller Arten, vor allem von gebleichtem, ungeleimtem und geleimtem ligninfreiem Papier. Ganz besonders geeignet sind diese Verbindungen zum Färben von ungeleimtem Papier (Tissues) als Folge ihrer sehr hohen Standard-Affinität zu diesem Substrat.

Die erfindungsgemässen Azoverbindungen ziehen sehr gut auf diese Substrate, wobei die Abwasser – auch bei tiefen Nuancen (bis über 1/1 RT = Richttyptiefe) – farblos bleiben, was ein eminenter technischer und ökologischer Vorteil, insbesondere im Hinblick auf die heutigen Abwasser-Gesetze, ist. Der gute Ausziehgrad ist auch für eine gute Reproduzierbarkeit der Nuance von Vorteil. Der Ausziehgrad wird praktisch nicht von der Wasserhärte beeinflusst. Die Papierfärbungen sind nassecht, d.h. sie zeigen keine Neigung zum Ausbluten, wenn gefärbtes Papier in nassem Zustand mit feuchtem weissem Papier in Berührung gebracht wird. Diese Eigenschaft ist besonders für sogenannte «Tissues» erwünscht, bei denen vorhersehbar ist, dass das gefärbte Papier in nassem Zustand (z.B. getränkt mit Wasser, Alkohol, Tensid-Lösung usw.) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der erfindungsgemässen Azofarbstoffe ist für das Kontinuefärben von Papier von grossem Vorteil und ermöglicht somit einen sehr breiten Einsatz.

Die folgenden Beispiele veranschaulichen die Erfindung, ohne sie darauf zu limitieren. Die Temperaturen sind in Grad Celsius angegeben, Teile bedeuten Gewichtsteile und %-Angaben sind Gewichtsprozente.

Beispiel 1

24 Teile 2-(4'-Aminophenyl)-6-methylbenzthiazol werden wie üblich diazotiert. Die Suspension der Diazoverbindung wird dann in eine alkoholische Lösung von 24,2 Teilen 4-Chloracetessigsäure-(4'-methoxybenzamid) (erhältlich

durch Chlorierung des Diketens und Acylierung des so erhaltenen 4-Chloracetessigsäure-chlorids mit 4-Methoxy-anilin gemäss J. Amer. Chem. Soc. 1940, 62, 1147) und 20 Teilen Natriumacetat eingetragen. Nach beendeter Kupplung wird die Verbindung der Formel

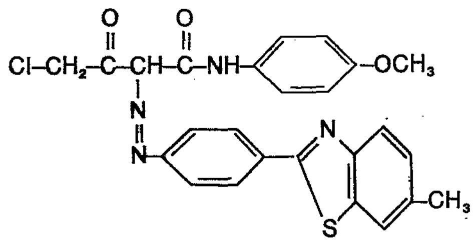

abgesaugt und getrocknet.

10 Teile der so erhaltenen Monoazoverbindung werden in 50 Teile Pyridin eingetragen und 1 Stunde auf 80° erwärmt. Der ausgefallene Farbstoff der Formel:

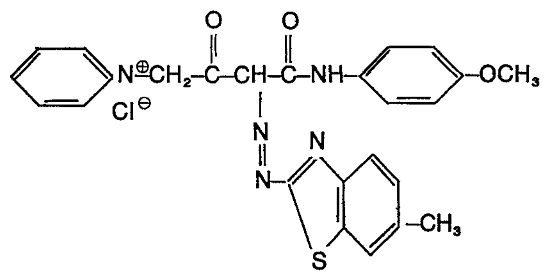

zieht auf Papier vollständig auf, und die hellen gelben Färbungen besitzen ein gutes Echtheitsniveau.

Ersetzt man im obigen Beispiel die 10 Teile der Monoazoverbindung aus diazotiertem 2-(4'-Aminophenyl)-6-methylbenzthiazol und 4-Chloracetessigsäure-(4'-methoxybenzamid) durch äquivalente Teile der in folgender Tabelle aufgeführten Monoazoverbindungen und aminiert diese mit Pyridin, so erhält man bei im übrigen gleicher Arbeitsweise kationische Farbstoffe, deren Farbnuance auf Papier in der letzten Kolonne der Tabelle angegeben ist.

Tabelle

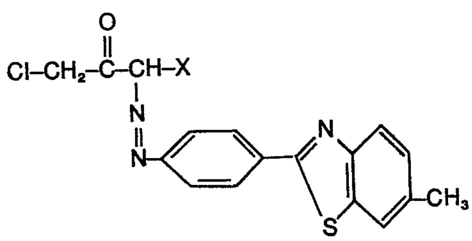

| Beispiel | Monoazoverbindung | Nuance auf Papier |
|---|---|---|
| 2 | 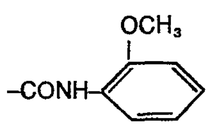 | gelb |
| 3 | 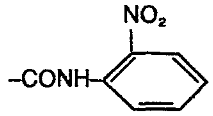 | gelb |
| 4 | 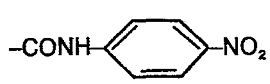 | gelb |
| 5 | 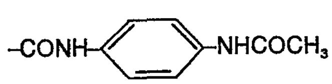 | gelb |

Tabelle (Fortsetzung)

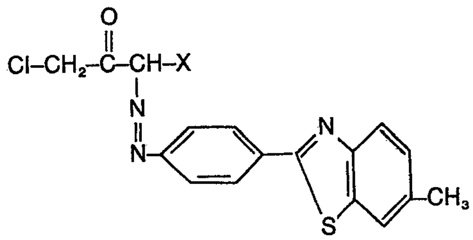

| Beispiel | Monoazoverbindung | Nuance auf Papier |
|---|---|---|
| 6 | 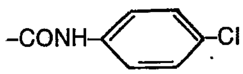 | gelb |
| 7 | 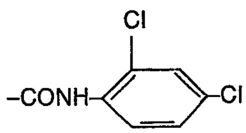 | gelb |
| 8 | 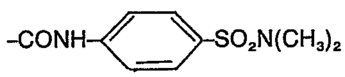 | gelb |
| 9 | 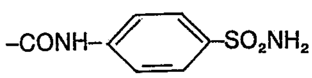 | gelb |
| 10 | 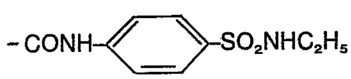 | gelb |
| 11 | 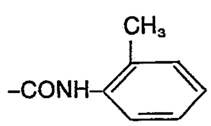 | gelb |
| 12 | 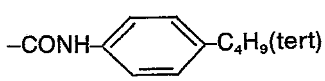 | gelb |
| 13 | 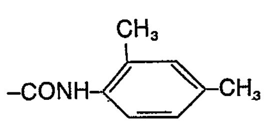 | gelb |
| 14 | 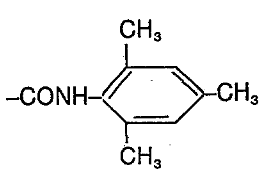 | gelb |

Tabelle (Fortsetzung)

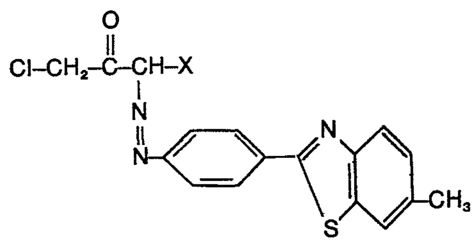

| Beispiel | Monoazoverbindung | Nuance auf Papier |
|---|---|---|
| 15 | 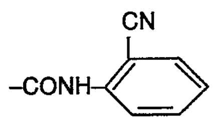 | gelb |
| 16 | 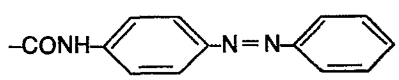 | rotstichig gelb |
| 17 | 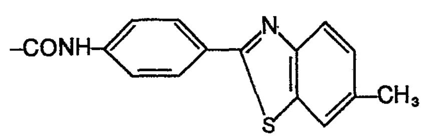 | rotstichig gelb |
| 18 | 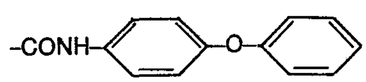 | gelb |

Beispiel 19

7 Teile der Monoazoverbindung gemäss Beispiel 1 werden in 200 Teilen einer 40%igen wässrigen Dimethylaminlösung 4 Stunden lang bei 40° gerührt. Der isolierte basische Farbstoff der Formel

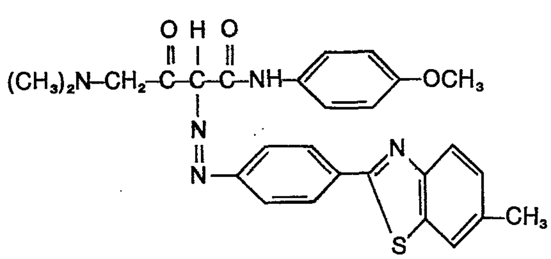

ist in verdünnter Essigsäure löslich.

Beispiel 20

Werden 10 Teile der Monoazoverbindung gemäss Beispiel 1 in eine 40%ige wässrige Trimethylaminlösung eingetragen und während 6 Stunden bei 40° erwärmt, so erhält man einen kationischen gelben Farbstoff der Formel

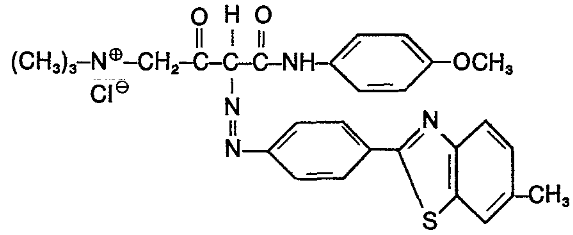

der auf Papier gute Eigenschaften besitzt.

Ersetzt man im obigen Beispiel das Trimethylamin durch Triäthylendiamin oder N,N-Dimethyläthanolamin oder N,N-Dimethylhydrazon, so erhält man ähnliche Farbstoffe mit gleich guten Eigenschaften.

Beispiel 21

48 Teile 2-(4'-Aminophenyl)-6-methylbenzthiazol werden wie üblich diazotiert. Die Suspension der Diazoverbindung wird dann in eine alkoholische Lösung von 34,5 Teilen N,N'-Bis-4-Chloracetoacetyl-p-phenylendiamin (erhältlich durch Chlorierung des Diketens und Acylierung des so erhaltenen 4-Chloracetessigsäure-chlorids mit p-Phenylendiamin) und 40 Teilen Natriumacetat eingetragen. Nach beendeter Kupplung und Quaternierung in Pyridin gemäss Beispiel 1 isoliert man den Farbstoff der Formel

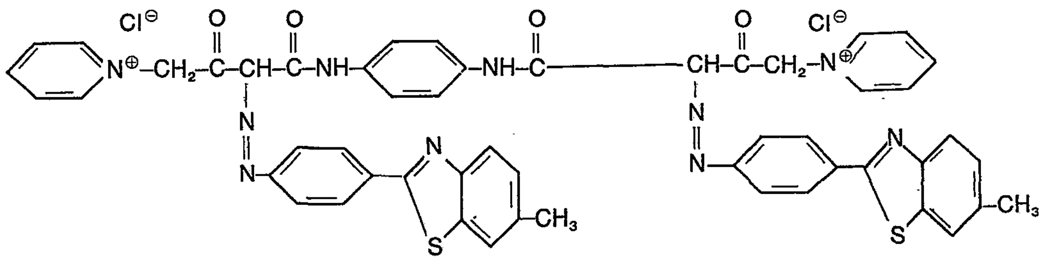

der auf Papier vollständig zieht und ein sehr hohes Echtheitsniveau besitzt.

Beispiel 22

Man mischt 50 Teile chemisch gebleichte Buche Sulfit mit 50 Teilen gebleichtem Sulfit RKN 15 (Mahlgrad 20° SR) und 2 Teile des Farbstoffes der Formel

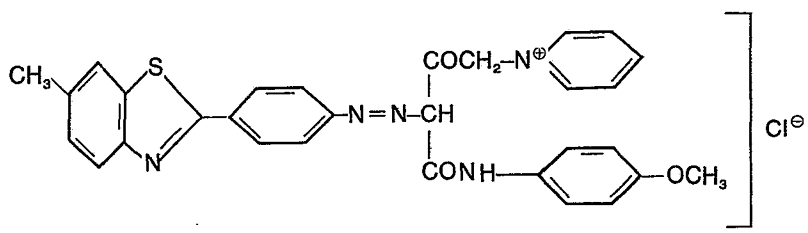

in Wasser (pH 6, Wasserhärte 10° dH, Temperatur 20° Flottenverhältnis 1:40). Nach 15minutigem Rühren werden Papierblätter auf einem Frank-Blattbildner hergestellt.

Das Papier ist in einer sehr intensiven, lichtechten rotstichig gelben brillanten Nuance gefärbt.

Der Ausziehgrad erreicht 100%. Das Abwasser ist völlig farblos.

Beispiel 23

Man arbeitet wie in Beispiel 22, verwendet jedoch 2 Teile des bekannten Farbstoffes

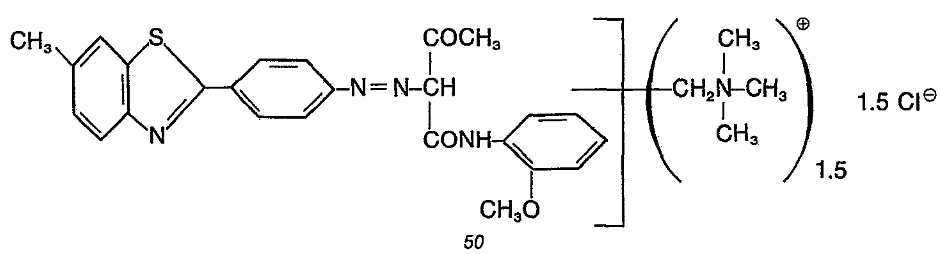

(US 3 933 787). Das Papier ist in einer grünstichig gelben Nuance gefärbt. Der Ausziehgrad erreicht kaum 65%. Das Abwasser ist stark gefärbt.

**Patentansprüche**

1. Azoverbindungen der Formel I

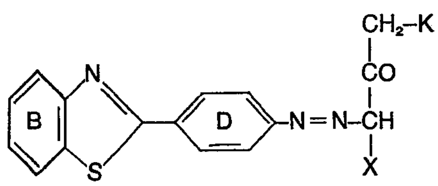

(I)

worin bedeuten:

K einen gegebenenfalls quaternisierten basischen Rest,

X den Rest COOR, worin R eine Alkylgruppe oder eine gegebenenfalls substituierte Phenylgruppe bedeutet, oder X stellt den Rest CONHR' dar, worin R' eine Alkylgruppe oder eine gegebenenfalls substituierte Phenylgruppe bedeutet und wobei die Benzoreste B und/oder D noch weiter substituiert sein können.

2. Azoverbindungen gemäss Anspruch 1, dadurch gekennzeichnet, dass K einen quaternisierten basischen Rest darstellt.

3. Azoverbindungen gemäss Anspruch 2, dadurch gekennzeichnet, dass K einen Rest der Formeln

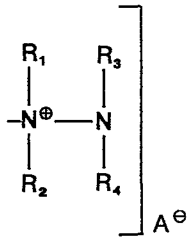

oder

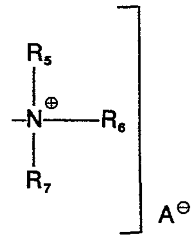

darstellt, worin bedeuten:

$R_1$ und $R_2$ unabhähgig voneinander eine gegebenenfalls substituierte Alkylgruppe ($C_1$–$C_4$) oder eine gegebenenfalls substituierte Cycloalkylgruppe oder $R_1$ bildet mit $R_2$ unter Einschluss des N-Atoms einen heterocyclischen Ring;

$R_3$ und $R_4$ unabhähgig voneinander Wasserstoff, gegebenenfalls substituiertes Alkyl $C_1$–$C_4$ oder eine gegebenenfalls substituierte Cycloalkyl- oder Arylgruppe; $R_5$ Wasserstoff, gegebenenfalls substituiertes Alkyl ($C_1$–$C_4$) oder gegebenenfalls substituiertes Cycloalkyl oder Aryl; $R_6$ Wasserstoff, gegebenenfalls substituiertes Alkyl ($C_1$–$C_4$), gegebenenfalls substituiertes Cycloalkyl, gegebenenfalls substituiertes Alkoxy oder gegebenenfalls substituiertes Aryl; $R_7$ gegebenenfalls substituiertes Alkyl ($C_1$–$C_4$) oder gegebenenfalls substituiertes Cycloalkyl oder $R_1$ und $R_3$ und/oder $R_2$ und $R_4$ bilden mit dem N-Atom zusammen einen heterocyclischen Ring, oder $R_5$ und $R_6$ oder $R_5$, $R_6$ und $R_7$ bilden unter Einschluss des N-Atoms einen heterocyclischen Ring, und $A^\ominus$ bedeutet ein Anion.

4. Azoverbindungen gemäss Anspruch 3, dadurch gekennzeichnet, dass K den Pyridiniumrest darstellt.

5. Azoverbindungen gemäss Anspruch 1, dadurch gekennzeichnet, dass X den Rest CONHR′ darstellt, worin R′ eine durch Alkoxy substituierte Phenylgruppe bedeutet.

6. Azoverbindungen gemäss Anspruch 1, dadurch gekennzeichnet, dass der Benzoring B substituiert ist durch Alkyl ($C_1$–$C_4$), Halogen, Alkoxy ($C_1$–$C_4$), $SO_2NH_2$, $NO_2$, OH und/oder Phenyl.

7. Azoverbindungen gemäss Anspruch 1, dadurch gekennzeichnet, dass K einen quaternisierten basischen Rest und X den Rest CONHR′ darstellt, der Benzorest B durch eine Alkylgruppe substituiert ist und der Benzorest D nicht weiter substituiert ist.

8. Azoverbindungen gemäss Anspruch 7, dadurch gekennzeichnet, dass K den Pyridiniumrest darstellt und X den Rest CONHR′, worin R′ eine gegebenenfalls durch Alkoxy substituierte Phenylgruppe bedeutet.

9. Azoverbindung gemäss Anspruch 1 der Formel

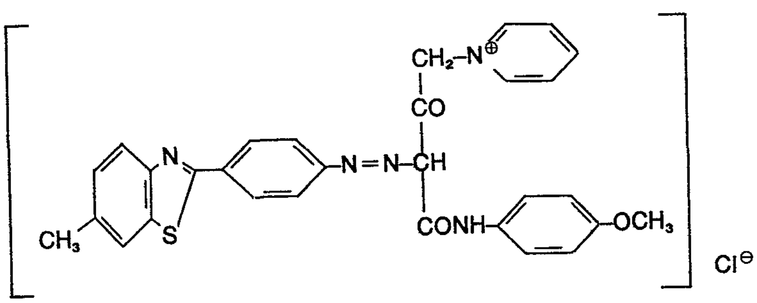

10. Verfahren zur Herstellung von Azoverbindungen der Formel I gemäss Anspruch 1, dadurch gekennzeichnet, dass man

a) eine Verbindung der Formel II

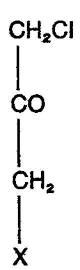

(II)

mit einem diazotierten Amin der Formel III

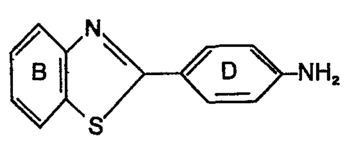

(III)

kuppelt und das Kupplungsprodukt anschliessend mit einem Amin zu einer basischen oder kationischen Verbindung umsetzt und die basische Gruppe gegebenenfalls quaternisiert, oder

b) eine Verbindung der Formel II

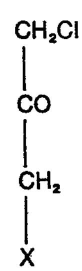

(II)

mit einem Amin zu einer basischen oder kationischen Verbindung umsetzt und anschliessend mit einem diazotierten Amin der Formel III kuppelt, wobei in allen Formeln die Symbole X, B und D die im Anspruch 1 angegebene Bedeutung haben.

11. Verwendung der Azoverbindungen der Formel I gemäss Anspruch 1 als Farbstoffe zum Färben und Bedrucken von Textilmaterialien, Papier und Leder.

12. Verwendung der Azoverbindungen der Formel I gemäss Anspruch 11 als Farbstoffe zum Färben und Bedrucken von Cellulose- oder Polyacrylnitrilmaterialien.

13. Verwendung der Azoverbindungen der Formel I gemäss Anspruch 11 als Farbstoffe zum Färben von gebleichtem ligninfreiem, ungeleimtem Papier.

14. Die mit den Azoverbindungen gemäss Anspruch I behandelten Materialien.

**Claims**

1. An azo compound of the formula I

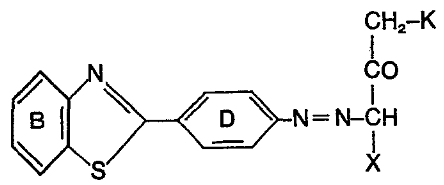

(I)

wherein
K is an optionally quaternised basic group,
X is the radical COOR, in which R is an alkyl group or a substituted or unsubstituted phenyl group, or X is the radical CONHR′, in which R′ is an alkyl group or a substituted or unsubstituted phenyl group; and wherein the benzene rings B and/or D can be further substituted.
2. An azo compound according to Claim 1, wherein K is a quaternised basic group.
3. An azo compound according to Claim 2, wherein K is a group of the formula

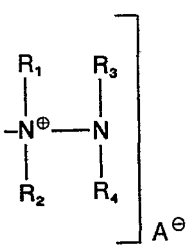

or

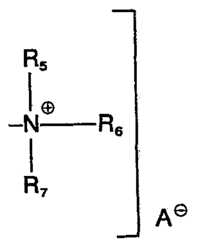

wherein

$R_1$ and $R_2$ independently of one another are each a substituted or unsubstituted alkyl group ($C_1$–$C_4$), or a substituted or unsubstituted cycloalkyl group, or $R_1$ forms with $R_2$ with the inclusion of the N atom a heterocyclic ring;

$R_3$ and $R_4$ independently of one another are each hydrogen, substituted or unsubstituted alkyl ($C_1$–$C_4$), or a substituted or unsubstituted cycloalkyl or aryl group;

$R_5$ is hydrogen, substituted or unsubstituted alkyl ($C_1$–$C_4$), or substituted or unsubstituted cycloalkyl or aryl;

$R_6$ is hydrogen, substituted or unsubstituted alkyl ($C_1$–$C_4$), substituted or unsubstituted cycloalkyl, substituted or unsubstituted alkoxy, or substituted or unsubstituted aryl;

$R_7$ is substituted or unsubstituted alkyl ($C_1$–$C_4$), or substituted or unsubstituted cycloalkyl; or

$R_1$ and $R_3$ and/or $R_2$ and $R_4$ form together with the N atom a heterocyclic ring, or $R_5$ and $R_6$ or $R_5$, $R_6$ and $R_7$ form with the inclusion of the N atom a heterocyclic ring; and $A^{\ominus}$ is an anion.

4. An azo compound according to Claim 3, wherein K is the pyridinium group.

5. An azo compound according to Claim 1, wherein X is the radical CONHR′, in which R′ is a phenyl group substituted by alkoxy.

6. An azo compound according to Claim 1, wherein the benzene ring B is substituted by alkyl ($C_1$–$C_4$), halogen, alkoxy ($C_1$–$C_4$), $SO_2NH_2$, $NO_2$, and/or phenyl.

7. An azo compound according to Claim 1, wherein K is a quaternised basic group, and X is the radical CONHR′, the benzene ring B is substituted by an alkyl group, and the benzene ring D is not further substituted.

8. An azo compound according to Claim 7, wherein K is the pyridinium group, and X is the radical CONHR′, in which R′ is a phenyl group which is unsubstituted or substituted by alkoxy.

9. An azo compound according to Claim 1 of the formula

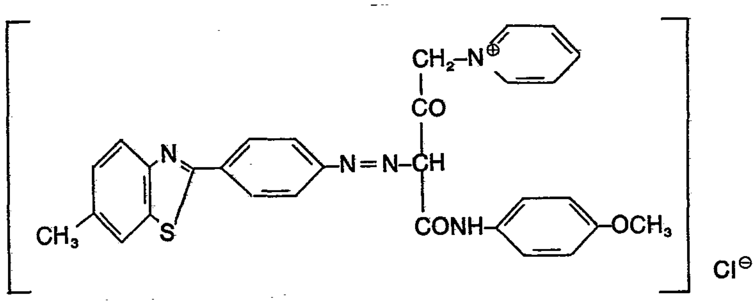

10. A process for producing an azo compound of the formula I according to Claim 1, which process comprises

a) coupling a compound of the formula II

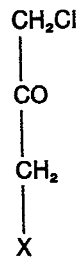

(II)

with a diazotised amine of the formula III

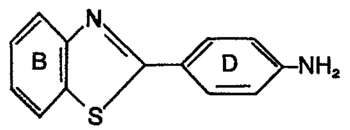

(III)

and subsequently reacting the coupling product with an amine to give a basic or cationic compound, and optionally quaternising the basic group; or

b) reacting a compound of the formula II

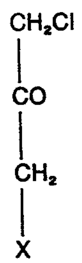

(II)

with an amine to give a basic or cationic compound, and subsequently coupling this with a diazotised amine of the formula III, the symbols X, B and D in all formulae having the meanings given in Claim 1.

11. Use of the azo compound of the formula I according to Claim 1 as a dye for the dyeing and printing of textile materials, paper and leather.

12. Use of the azo compound of the formula I according to Claim 11 as a dye for the dyeing and printing of cellulose materials or polyacrylonitrile materials.

13. Use of the azo compound of the formula I according to Claim 11 as a dye for the dyeing of bleached, ligninfree, unsized paper.

14. The materials treated with an azo compound according to Claim 1.

**Revendications**

1. Composés azoïques de formule I

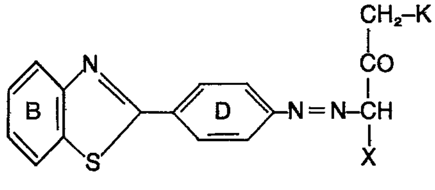

(I)

dans laquelle:

K désigne un radical basique, éventuellement quaternisé,

X désigne le radical COOR dans lequel R désigne un groupe alkyle ou un groupe phényle éventuellement substitué ou X représente le radical CONHR′, dans lequel R′ désigne un groupe alkyle ou un groupe phényle éventuellement substitué, tandis que les restes benzo B et/ou D peuvent encore porter d'autres substituants.

2. Composés azoïques selon la revendication 1, caractérisés par le fait que K représente un radical basique quaternisé.

3. Composés azoïques selon la revendication 2, caractérisés par le fait que K représente un radical répondant aux formules.

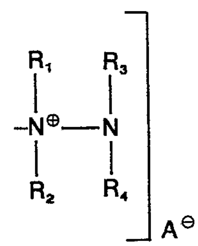

ou

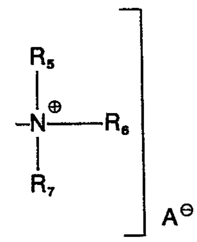

dans lesquels:

$R_1$ et $R_2$ désignent indépendamment l'un de l'autre, un radical alkyle ($C_1$–$C_4$) éventuellement substitué ou un groupe cycloalkyle éventuellement substitué ou $R_1$ forme avec $R_2$ en englobant l'atome de N, un noyau hétérocyclique;

$R_3$ et $R_4$ désignent indépendamment l'un de l'autre un atome d'hydrogène, un groupe alkyle ($C_1$–$C_4$) éventuellement substitué ou un groupe cycloalkyle ou aryle éventuellement substitué; $R_5$ désigne un atome d'hydrogène, un groupe alkyle ($C_1$–$C_4$) éventuellement substitué ou un groupe cycloalkyle ou aryle éventuellement substitué;

~~$R_6$ désigne un atome d'hydrogène un radical~~ alkyle ($C_1$–$C_4$) éventuellement substitué, un groupe cycloalkyle éventuellement substitué, un groupe alcoxy éventuellement substitué et un groupe aryle éventuellement substitué;

$R_7$ désigne un groupe alkyle ($C_1$–$C_4$) éventuellement substitué ou un groupe cycloalkyle éventuellement substitué ou $R_1$ conjointement avec $R_3$ et/ou $R_2$ conjointement avec $R_4$ forment conjointement avec les atomes N, un noyau hétérocyclique ou $R_5$ et $R_6$ ou $R_5$, $R_6$ et $R_7$ forment en englobant l'atome N, un noyau hétérocyclique; tandis que $\bar{A}$ représente un anion.

4. Composés azoïques selon la revendication 3, caractérisés par le fait que K représente le radical pyridinium.

5. Composés azoïques selon la revendication 1, caractérisés par le fait que K représente le radical CONHR′, dans lequel R′ désigne un groupe phényle alcoxy-substitué.

6. Composés azoïques selon la revendication 1, caractérisés par le fait que le noyau benzo B est substitué par des groupes alkyle ($C_1$–$C_4$), halogène, alcoxy ($C_1$–$C_4$), $SO_2NH_2$, $NO_2$, OH et/ou phényle.

7. Composés azoïques selon la revendication 1, caractérisés par le fait que K est un radical basique quaternisé, et X représente le radical CONHR′, le radical benzo B est substitué par un groupe alkyle et le radical benzo D ne porte pas d'autres substituants.

8. Composés azoïques selon la revendication 7, caractérisés par le fait que K représente le radical pyridinium et X le radical CONHR′, dans lequel R′ désigne un groupe phényle éventuellement alcoxy-substitué.

9. Composé azoïque selon la revendication 1, répondant à la formule

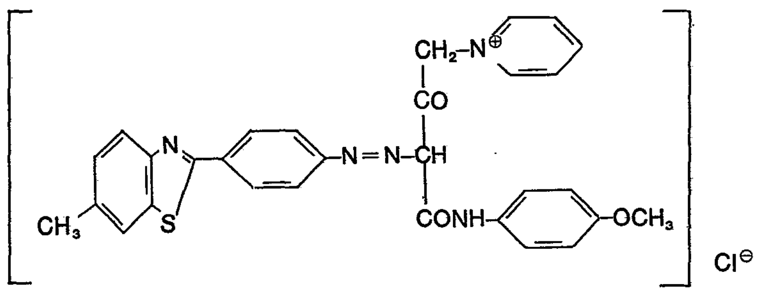

10. Procédé pour la préparation de composés azoïques de formule I selon la revendication 1, caractérisé par le fait que a) on copule un composé de formule II

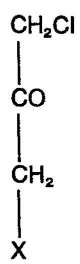

(II)

avec une amine diazotée de formule III

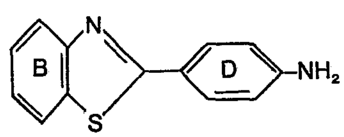

(III)

et on fait réagir consécutivement le produit de copulation avec une amine en obtenant un composé basique ou catuonique, puis on quaternise éventuellement le groupe basique, ou

b) on fait réagir le composé de formule II

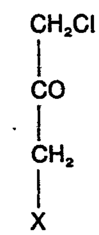

(II)

avec une amine en obtenant un composé basique ou cationique que l'on copule consécutivement avec une amine diazotée de formule III, dans toutes les formules précitées, les symboles X, B et D étant définis comme spécifié dans la revendication 1.

11. Applications des composés azoïques de formule I selon la revendication 1, comme colorants pour la teinture et l'impression de matières textiles, du papier et du cuir.

12. Applications des composés azoïques de formule I selon la revendication 11 comme colorant pour la teinture et l'impression de matières cellulosiques ou à base de polyacrylonitrile.

13. Applications des composés azoïques de formule I selon la revendication 11 comme colorants pour la teinture du papier blanchi exempt de lignine, non collé.

14. Matières traitées par les composés azoïques selon la revendication 1.